# EUROPÄISCHE PATENTSCHRIFT

(11) **EP 3 105 039 B1**
(45) Veröffentlichungstag und Bekanntmachung des Hinweises auf die Patenterteilung: **10.04.2019**
(21) Anmeldenummer: 14704355.8
(22) Anmeldetag: 14.02.2014
(51) Int. Cl.: B29C 65/06, B29C 37/04, B23C 5/10

(54) **SETZWERKZEUG ZUM SETZEN EINES REIBSCHWEISSDOMS**
SETTING TOOL FOR SETTING A FRICTION WELDING DOME
OUTIL DE POSE POUR POSER UN DÔME DE SOUDAGE PAR FRICTION

(43) Veröffentlichungstag der Anmeldung: 21.12.2016
(73) Patentinhaber: EJOT GmbH & Co. KG, 57319 Bad Berleburg (DE)
(72) Erfinder: BECKER, Mirko, 57334 Bad Laasphe - Hesselbach (DE); KRAUSSER, Ingo, 35216 Biedenkopf Ortsteil Wallau (DE); KITTEL, Dieter, 57334 Bad Laasphe (DE)
(74) Vertreter: Hohgardt, Martin
(86) Internationale Anmeldenummer: PCT/EP2014/052894
(87) Internationale Veröffentlichungsnummer: WO 2015/120900

(56) Entgegenhaltungen:
- EP-A1- 0 112 074
- EP-A1- 0 780 581
- EP-A1- 2 732 956
- WO-A1-93/12344
- JP-A- H03 203 628
- US-A- 5 536 344
- US-A- 6 153 035

## Beschreibung

Die Erfindung betrifft ein Setzwerkzeug, insbesondere ein Setzwerkzeug zum Setzen eines Reibschweißdoms in ein Mehrschichtmaterial sowie einen entsprechenden Reibschweißdom, ein Setzwerkzeugsystem und ein Verfahren zum Setzen eines Reibschweißdoms.

Reibschweißdome sind Befestigungselemente, die verwendet werden zur Befestigung von Bauteilen an Mehrschichtmaterialien wie zum Beispiel Sandwichmaterialien oder Wabenmaterialien. Sandwich- und/oder Wabenmaterialien bestehen zumeist aus einer Materialschicht und zumindest eine diese Materialschicht abdeckende Deckschicht, häufig werden Sandwichmaterialien auch mit einer oberen und unteren Deckschicht versehen. Dabei ist oder sind die die Deckschichten zumeist aus einem Material hergestellt, welches entweder eine höhere Dichte oder größere Stabilität aufweist, als das Material der inneren Schicht. Die Deckschichten werden verwendet, um der inneren Materialschicht eine größere Stabilität zu verleihen, was ansonsten nur durch eine Erhöhung der Dicke der inneren Materialschicht möglich wäre. Die Verwendung von derartigen Deckschichten hat den Vorteil, dass ein derartiges Sandwichmaterial weniger Gewicht aufweist als ein Material, das nur aus einer Materialschicht besteht. Derartige Sandwichmaterialien werden häufig in der Autoindustrie, im Bootsbau, im Karavanbau oder im Flugzeugbau verwendet, weil bei geringem Gewicht eine hohe strukturelle Integrität erreicht werden kann.

Um an Sandwichmaterialien andere Bauteile zu befestigen, werden Reibschweißdome verwendet. Die Reibschweißdome sind zumeist aus einem Hartkunststoff hergestellt und werden mittels Druck und Reibung in das Sandwichmaterial gesetzt. Durch den Druck und die Reibung beim Setzen eines Reibschweißdoms wird Hitze erzeugt, mit deren Hilfe der Bereich des Sandwichmaterials, in den der Reibschweißdom gesetzt werden soll, aufgeschmolzen wird, so dass dieser Bereich sich mit dem Reibschweißdom verbinden kann. Nach einer gewissen Abkühlphase ist der Reibschweißdom dann fest mit dem Sandwichmaterial verbunden und in diesem angeordnet. Der Reibschweißdom bildet nun eine ideale Grundlage für die Befestigung von Bauteilen an dem Sandwichmaterial. Beispielsweise kann der Reibschweißdom ein Gewinde aufweisen, das verwendet werden kann, um andere Bauteile mit dem Reibschweißdom und dementsprechend mit dem Sandwichmaterial zu verschrauben. Dabei werden die Reibschweißdome vorzugsweise oberflächenbündig in das Sandwichmaterial gesetzt, um eine ebene Fläche für die Befestigung eines anderen Bauteils zur Verfügung zur stellen, wie zum Beispiel in US 6,153,025 gezeigt.

Dokument US 6 153 035 A offenbart ein Setzwerkzeug mit den Merkmalen des Oberbegriffs des Anspruchs 1, einen Reibschweißdom, sowie ein Verfahren zum Setzen eines Reibschweißdoms, wobei der Reibschweißdom an einem ersten Endbereich eines Antriebstrangs eines Setzwerkzeuges angeordnet wird.

Beim Setzen des Reibschweißdoms in das Sandwichmaterial oder Mehrschichtmaterial ergibt sich allerdings das Problem, dass die meisten Mehrschichtmaterialien derart beschaffene Deckschichten aufweisen, die durch Reibung und Druck mittels des Reibschweißdoms nicht so einfach aufgeschmolzen werden können, insbesondere wenn sehr harte oder dichte Materialien für die Deckschichten verwendet werden. Daher ist es in den meisten Fällen vor dem Setzen des Reibschweißdoms notwendig, in einem ersten Arbeitsschritt die Deckschicht zumindest teilweise an der Setzstelle des Reibschweißdoms zu entfernen oder derart aufzuweichen, dass der Reibschweißdom diese durchdringen kann und gesetzt werden kann, wie zum Beispiel in WO 93/12344 A1 gezeigt. Des Weiteren tritt beim oberflächenbündigen Setzen des Reibschweißdoms das Problem auf, dass aufgeschmolzenes Material an der Oberfläche zwischen Reibschweißdom und Rand des Mehrschichtmaterials austritt und einen Wulst um die Setzstelle des Reibschweißdoms bildet. Diese Wulst muss nach dem Setzen des Reibschweißdoms in einem weiteren Arbeitsschritt entfernt werden, um eine einheitliche Oberflächenstruktur zu schaffen, damit ein Bauteil flächenbündig mit dem Reibschweißdom und dementsprechend mit dem Mehrschichtmaterial verbunden werden kann.

Zum Setzen des Reibschweißdoms sind dementsprechend mehrere Arbeitsschritte notwendig, die mit mehreren unterschiedlichen Werkzeugen ausgeführt werden müssen. Beim Wechsel der Werkzeuge ist dabei auf die genaue Ausrichtung der Werkzeuge zu achten, um Unwuchten zu verhindern und den Reibschweißdom zentriert zu setzen, so dass dieser bestmöglich mit dem Mehrschichtmaterial verschweißt werden kann.

Eine Aufgabe der vorliegenden Erfindung ist es daher ein Setzwerkzeug bereitzustellen, mit dem ein Reibschweißdom in verschiedene Materialien, bevorzugt in Mehrschichtmaterialien wie zum Beispiel Sandwichmaterialien, gesetzt werden kann, ohne dass die obigen Nachteile auftreten, also ohne dass ein Vor- und Nachbearbeiten notwendig ist.

Diese Aufgabe wird durch das in dem unabhängigen Anspruch beanspruchte Setzwerkzeug gelöst. Bevorzugte Ausführungsformen finden sich in den abhängigen Ansprüchen wieder.

Das erfindungsgemäße Setzwerkzeug zum Setzen eines Reibscheißdoms weist einen Antriebstrang auf, der einen ersten Endbereich und einen zweiten Endbereich hat. Der Antriebstrang erlaubt eine Drehmomentübertragung zwischen den beiden Endbereichen.

Der erste Endbereich ist ausgestaltet zum Halten des Reibschweißdoms. Beispielsweise kann der erste Endbereich eine Halteplatte aufweisen, die ein Ende des Reibschweißdoms kontaktieren kann. Dabei kann dieses Ende des Reibschweißdoms beispielsweise das Ende des Reibschweißdoms sein, das von dem Material in das der Reibschweißdom gesetzt werden soll abgewandt ist.

Zum Entfernen einer eventuell vorhandenen Deckschicht des Mehrschichtmaterials, weist der erste Endbereich des Antriebstrangs des Weiteren zumindest ein Fräsmittel auf, welches sich relativ zum Reibschweißdom der am ersten Endbereich gehalten wird bewegen kann. In einer Ausführungsform kann sich das zumindest eine Fräsmittel relativ zu einem Ende des ersten Endbereichs des Antriebstrangs bewegen, in diesem Fall relativ zu dem Ende des ersten Endbereichs des Antriebstrangs, das den Reibschweißdom hält.

Grundsätzlich ist das Fräsmittel derart ausgestaltet, dass es in einer ersten Position die Deckschicht des Mehrschichtmaterials entfernen kann und in einer zweiten Position das Verbinden des Reibschweißdoms mit der unter der Deckschicht liegenden Materialschicht des Mehrschichtmaterials nicht behindert. Beispielsweise kann sich das zumindest eine Fräsmittel in einer ersten Position durch den am ersten Endbereich angeordneten Reibschweißdom hindurch erstrecken, so dass zumindest ein Ende des zumindest einen Fräsmittels in dieser ersten Position näher am Material angeordnet ist, als das dem Material zugewandte Ende des Reibschweißdoms. Nach dem Entfernen der Deckschicht, kann das zumindest eine Fräsmittel dann in eine zweite Position bewegt werden. In dieser zweiten Position kann das zumindest eine Ende des zumindest einen Fräsmittels, welches in der ersten Position näher am Material angeordnet war als das eine Ende des Reibschweißdoms, entweder gleich weit oder weiter vom Material entfernt sein, als das eine Ende des Reibschweißdoms. In dieser zweiten Position des zumindest einen Fräsmittels kontaktiert dementsprechend nur noch der Reibschweißdom das Material unmittelbar. Dies stellt sicher, dass durch das zumindest eine Fräsmittel nur die Deckschicht im notwendigen Umfang entfernt wird, nicht aber auch die unter der Deckschicht liegende Materialschicht entfernt wird, welche mit dem Reibschweißdom verschweißt werden soll.

Das zumindest eine Fräsmittel muss die Deckschicht auch nicht vollständig entfernen. Es kann beispielsweise auch genügen, dass das zumindest eine Fräsmittel die Deckschicht derart aufweicht, dass der Reibschweißdom beim weiteren Setzen durch diese hindurchdringen kann. Beispielsweise kann es genügen, wenn das zumindest eine Fräsmittel genügend Hitze erzeugt, beispielsweise durch Drehung desselbigen unter Druckausübung auf der Deckschicht, um die Deckschicht anzuschmelzen beziehungswiese aufzuweichen, so dass anschließend der Druck und die Reibung ausgeübt von dem Reibschweißdom genügt, um durch das verbleibende Deckschichtmaterial hindurchzudringen.

Um das Material welches beim Setzen des Reibschweißdoms an der Oberfläche zwischen Reibschweißdom und Mehrschichtmaterial austritt zu entfernen, weist der erste Endbereich des Antriebstrangs auch zumindest ein Schneidmittel auf. Dieses Schneidmittel entfernt den oberflächigen Wulst an Material, der beim Setzen des Reibschweißdoms entsteht, so dass eine ebene Oberfläche entsteht.

Der zweite Endbereich des Antriebstrangs des erfindungsgemäßen Setzwerkzeuges ist derart ausgestaltet, dass dieser eine Kraftkopplung mit einem Antrieb herstellen kann. Beispielsweise kann der zweite Endbereich sechseckig geformt sein, also ähnlich zu einem bekannten Bit, so dass das Setzwerkzeug in einen entsprechend geformten Bithalter am Antrieb einsetzbar ist. Der zweite Endbereich kann aber auch einen runden Querschnitt aufweisen, so dass er zur Aufnahme in einem bekannten Bohrfutter dienen kann. Es sind aber auch beliebig andere Verbindungen denkbar, mit denen eine lösbare oder nichtlösbare Kraftkopplung hergestellt werden kann um ein Drehmoment auf den Antriebstrang übertragen zu können.

Mit dem erfindungsgemäßen Setzwerkzeug ist es erstmals möglich, mit nur einem Werkzeug und in einem Arbeitsschritt einen Reibschweißdom in ein Material zu setzen, ohne dass ein Vor- und Nacharbeiten notwendig ist.

In einer bevorzugten Ausführungsform weist der erste Endbereich zum Halten des Reibschweißdoms eine Halteplatte auf. Diese Halteplatte dient zum Halten des Reibschweißdoms und kontaktiert das dem Material abgewandte Ende des Reibschweißdoms. Die Halteplatte sorgt dafür, dass der Reibschweißdom eine mit dem ersten Endbereich gleichförmige Bewegung ausführen kann. Erfährt der Antriebstrang einen Vortrieb in Richtung Material, so erfährt auch der Reibschweißdom einen Vortrieb. Die Halteplatte dient dementsprechend auch als Gegenlager, so dass beim Setzen des Reibschweißdoms Druck auf den Reibschweißdom ausgeübt werden kann. Dabei ist die Halteplatte bevorzugt derart ausgestaltet, dass sie einen typischen Anpressdruck für das Setzen des Reibschweißdoms aushält, beispielsweise einen Anpressdruck von mehr als 200N.

Des Weiteren kann die Halteplatte derart ausgestaltet sein, dass sie eine lösbare Kraftkopplung mit dem Reibschweißdom herstellen kann, beispielsweise zur Übertragung eines Drehmoments von dem Antriebstrang auf den Reibschweißdom. Hierzu kann die Halteplatte zum Beispiel zumindest ein vorstehendes Element aufweisen, welches in einer komplementären Ausnehmung des Reibschweißdoms angeordnet werden kann. Dabei wird die Anzahl und die Ausgestaltung des zumindest einen vorstehenden Elements vorzugsweise derart gewählt, dass ein genügendes Drehmoment von dem Antriebstrang des Setzwerkzeuges auf den Reibschweißdom übertragen werden kann, um diesen im Material zu verschweißen. Gleichzeitig sollte die Ausgestaltung des zumindest einen vorstehenden Elements auch derart ausgelegt sein, dass der Reibschweißdom am ersten Endbereich des Setzwerkzeuges gehalten werden kann und sich nicht unbeabsichtigt von diesem löst. Dabei kann das zumindest eine vorstehende Element beispielsweise derart ausgestaltet sein, dass es eine Klickverbindung mit einem Reibschweißdom eingehen kann. Beispielsweise kann das zumindest eine vorstehende Element aber auch trapezförmig ausgestaltet sein mit dem sich verjüngenden Ende zur Halteplatte weisend, so dass der Reibschweißdom, der zumindest eine entsprechende also komplementäre Ausnehmung aufweisen kann, nur mit gewissem Kraftaufwand an dem zumindest einen vorstehenden Element befestigt werden kann. Derartige oder ähnliche Ausgestaltungen verhindern, dass sich der Reibschweißdom unbeabsichtigt vom ersten Endbereich des Setzwerkzeuges löst. Das zumindest eine vorstehende Element kann auch austauschbar sein. Der Abstand von mehreren vorstehenden Elementen zueinander kann variabel beziehungsweise einstellbar sein. Beispielsweise kann das zumindest eine vorstehende Elemente oder die mehreren vorstehenden Elemente am ersten Endbereich des Setzwerkzeugs auf Rastbahnen angeordnet sein. Diese erlauben es, dass die vorstehenden Elemente an verschiedenen Positionen fixiert werden können. Es sind aber auch andere dem Fachmann bekannte Lösung zur Verstellung oder zum Anordnen von verschiedenartigen vorstehenden Elementen denkbar. Die Verstellmöglichkeit beziehungsweise die Möglichkeit unterschiedliche vorstehende Elemente zu verwenden hat den Vorteil, dass mit dem gleichen Setzwerkzeug unterschiedliche Reibschweißdome verwendet werden können.

In einer weiteren bevorzugten Ausführungsform weist das erfindungsgemäße Setzgerät einen Mitnehmer auf, wobei der Mitnehmer ausgestaltet ist, um das zumindest eine Fräsmittel entlang des Antriebstrangs relativ zu dem gehaltenen Reibschweißdom von einer ersten Position hin zu einer zweiten Position zu bewegen. Das zumindest eine Fräsmittel kann sich zum Beispiel relativ zu einer am ersten Endbereich angeordneten Halteplatte zum Halten des Reibschweißdoms bewegen. Dabei kann zumindest ein Ende des zumindest einen Fräsmittels in der ersten Position des zumindest einen Fräsmittels näher am Material angeordnet sein als das dem Material zugewandte Ende des gehaltenen Reibschweißdoms und in der zweiten Position kann das Ende des zumindest einen Fräsmittels gleich oder weiter entfernt sein vom Material als das Ende des Reibschweißdoms. Dies bewirkt, dass in der zweiten Position das eine Ende des Fräsmittels das Material nicht mehr unmittelbar berührt, sondern nur noch der Reibschweißdom das Material unmittelbar berührt. Der Mitnehmer kann zum Beispiel eine Hülse sein, die am ersten Endbereich des Antriebstrangs angeordnet ist und zumindest das zumindest eine Fräsmittel umgibt und relativ zum Reibschweißdom bewegbar ist. Dabei ist die Hülse bevorzugt mit dem zumindest einen Fräsmittel verbunden. Durch diese Verbindung können sich die Hülse und das zumindest eine Fräsmittel gleichförmig relativ zum Antriebstrang bewegen. Die Hülse und das zumindest eine Fräsmittel sind zwar bevorzugt miteinander verbunden, das dem Material zugewandte Ende der Hülse hat aber bevorzugt einen definierten Abstand in Setzrichtung des Reibschweißdoms von dem Ende des zumindest einen Fräsmittels, so dass das eine Ende des zumindest einen Fräsmittels über das Ende der Hülse in Setzrichtung des Reibschweißdoms übersteht. Der Abstand der beiden Enden entspricht dabei bevorzugt der Dicke der zu entfernenden Deckschicht. Um das Setzwerkzeug bei unterschiedlich dicken Deckschichten verwenden zu können, kann dieser Abstand einstellbar sein, also variabel sein. Beim Setzen des Reibschweißdoms kontaktiert dementsprechend zunächst das eine Ende des zumindest einen Fräsmittels die Deckschicht des Materials und entfernt diese. Da der durch das zumindest eine Fräsmittel entfernte Bereich der Deckschicht kleiner ist als der Querschnitt der Hülse, setzt nach dem Entfernen der Deckschicht durch das zumindest eine Fräsmittel die Hülse auf der verbleibenden Deckschicht auf. Da die Hülse bevorzugt relativ zum Antriebstrang bewegbar ist und bevorzugt fest mit dem zumindest einen Fräsmittel verbunden ist, kann dass Fräsmittel nach dem Auftreffen der Hülse auf der verbleibenden Deckschicht nicht weiter in das Material eindringen. Wird der Reibschweißdom durch den Antriebstrang aber weiter in Richtung Material getrieben, so wird das zumindest eine Fräsmittel und die damit verbundene Hülse relativ zum Reibschweißdom bewegt. In dem Fall in dem sich das zumindest eine Fräsmittel durch den Reibschweißdom erstreckt, wird bei dieser Bewegung der Reibschweißdom von dem zumindest einen Fräsmittel abgestreift. Dies bewirkt, dass nicht mehr das zumindest eine Fräsmittel das Material unmittelbar kontaktiert, sondern der Reibschweißdom. Dies hat den Vorteil, dass durch das zumindest eine Fräsmittel nicht auch die unter der Deckschicht liegende Materialschicht, mit der der Reibschweißdom verschweißt werden soll, entfernt wird.

In einer weiteren bevorzugten Ausführungsform sind das zumindest eine Schneidmittel und/oder das zumindest eine Fräsmittel federnd am ersten Endbereich des Antriebstrangs angeordnet. Die federnde Lagerung der Bauteile kann dabei durch eine Anschlagsplatte und jeweils eine zwischen Anschlagplatte und entsprechendem Bauteil, also dem zumindest einen Schneidmittel oder dem zumindest einen Fräsmittel, angeordnete Feder bewerkstelligt werden. Durch die federnde Lagerung können sich das zumindest eine Schneidmittel sowie das zumindest eine Fräsmittel von jeweils einer ersten Position zu jeweils einer zweiten Position relativ zueinander und relativ zum Antriebstrang entlang des Antriebstrangs bewegen.

Die federnde Lagerung des zumindest einen Fräsmittels hat dabei zum Beispiel den Vorteil, dass das zumindest eine Fräsmittel, welches sich relativ zum Reibschweißdom von einer ersten Position in eine zweite Position bewegen kann, immer wieder zurück in die erste Position gedrängt wird. Dies hat den Vorteil, dass nach dem Setzvorgang des Reibschweißdoms sich das zumindest eine Fräsmittel selbstständig wieder in die Ausgangsposition, das heißt die erste Position, bewegt und ein erneuter Setzvorgang gestartet werden kann, in der sich das zumindest eine Fräsmittel erneut von der ersten Position hin zur zweiten Position bewegen kann. Gleiches kann auch für die mit dem Fräsmittel verbundene Hülse gelten. Der Federweg kann dabei beispielsweise vorgeben, wie weit sich das zumindest eine Fräsmittel und die damit verbundene Hülse relativ zum Reibschweißdom beim Setzen des Reibschweißdoms entlang des Antriebstrangs verschieben können.

Dass sich das zumindest eine Schneidmittel von einer ersten Position zu einer zweiten Position relativ zum ersten Endbereich des Antriebstrangs und dementsprechend relativ zum Reibschweißdom bewegen kann, hat den Vorteil, dass beim Setzen des Reibschweißdoms nur ein entstehender Wulst entfernt wird, nicht aber auch weitere Teile der Deckschicht. Das zumindest eine Schneidmittel kann in der ersten Position den entstehenden Wulst entfernen und kann anschließend, also wenn der Wulst vollständig entfernt ist, in eine zweite Position bewegt werden, um zu verhindern, dass auch die Deckschicht des Mehrschichtmaterials entfernt wird.

In einer weiteren bevorzugten Ausführungsform des erfindungsgemäßen Setzwerkzeuges kann die erste Position des zumindest einen Schneidmittels und des zumindest einen Fräsmittels relativ zum ersten Endbereich des Antriebstrangs und/oder relativ zueinander einstellbar sein. Das heißt die erste Position des zumindest einen Schneidmittels und des zumindest einen Fräsmittels ist einstellbar in Bezug zu dem Reibschweißdom. Beispielsweise können sich das zumindest eine Schneidmittel und das zumindest eine Fräsmittel von einer einstellbaren ersten Position in eine zweite Position relativ zueinander bewegen. Beispielsweise kann die erste Position des zumindest einen Schneidmittels und des zumindest einen Fräsmittel in Abhängigkeit einer am Antriebstrang angeordneten Anschlagsplatte einstellbar sein. Diese Einstellbarkeit kann beispielsweise dadurch bewerkstelligt werden, dass die Anschlagsplatte variabel am Antriebstrang angeordnet werden kann. Das bedeutet, wird die Anschlagsplatte am Antriebstrang verschoben, so ändert sich auch die erste Position des zumindest einen Schneidmittels und des zumindest einen Fräsmittels, nicht relativ zueinander, aber relativ zum ersten Endbereich des Antriebstrangs, beispielsweise relativ zum gehaltenen Reibschweißdom. Dabei kann die Anschlagsplatte beispielsweise beliebig am Antriebstrang befestigt werden, beispielsweise durch die Verwendung einer Madenschraubensicherung. Es ist aber auch denkbar, dass am Antriebstrang sich in vorherbestimmten Abständen Rastnuten befinden, in denen oder mit denen die Anschlagsplatte verrastet werden kann, so dass die Anschlagsplatte vorherbestimmte Abstände zum Ende des ersten Endbereichs des Antriebstrangs beziehungsweise zum Reibschweißdom einnehmen kann.

Zusätzlich zu der Einstellbarkeit der ersten Position des zumindest einen Schneidmittels und/oder des zumindest einen Fräsmittels in Bezug auf das eine Ende des ersten Endbereichs des Antriebstrangs beziehungsweise in Bezug auf den gehaltenen Reibschweißdom, können auch die ersten Positionen des zumindest einen Schneidmittels und des zumindest einen Fräsmittels zueinander einstellbar sein. Es kann also beispielsweise der Abstand der dem Material zugewandten Kanten, zum Beispiel der Schneid- und Fräskanten, des zumindest einen Schneidmittels und des zumindest einen Fräsmittels einstellbar sein. Dementsprechend kann die erste Position des zumindest einen Schneidmittels in Bezug auf die Anschlagsplatte unabhängig von der ersten Position des zumindest einen Fräsmittels in Bezug auf die Anschlagsplatte einstellbar sein. Das Einstellen der ersten Position des zumindest einen Fräsmittels und des zumindest einen Schneidmittels hat den Vorteil, dass das Setzwerkzeug für unterschiedlich dicke Reibschweißdome geeignet ist und das mit dem Setzwerkzeug auch unterschiedlich dicke Deckschichten entfernt werden können. Beispielsweise bestimmt die erste Position des zumindest einen Fräsmittels in Relation zum zumindest einen Schneidmittel, wie weit das zumindest eine Fräsmittel über das dem Material zugewandte Ende des Reibschweißdoms übersteht, wenn sich das zumindest eine Fräsmittel durch den Reibschweißdom erstreckt und das eine Ende des Reibschweißdoms in einer Ebene mit der dem Material zugewandten Kante des zumindest einen Schneidmittels liegt. Der Abstand zwischen der dem Material zugewandten Kante des zumindest einen Schneidmittels und der dem Material zugewandten Kante des zumindest einen Fräsmittels bestimmt daher auch, wie dick der Reibscheißdom sein kann. Ist der Abstand zu klein gewählt, so kann sich das zumindest eine Fräsmittel nicht mehr durch den Reibschweißdom erstrecken und trifft nicht vor dem Reibschweißdom auf die Deckschicht auf. Ist der Abstand hingegen zu groß gewählt, so steht das zumindest eine Fräsmittel zu weit über den Reibschweißdom über und entfernt nicht nur die Deckschicht, sondern auch etwas von der unter der Deckschicht liegenden Materialschicht. Der Abstand zwischen der dem Material zugewandten Kante des zumindest einen Schneidmittels und der dem Material zugewandten Kante des zumindest einen Fräsmittels wird daher bevorzugt derart gewählt, dass der Abstand im Wesentlichen der Dicke des Reibschweißdoms plus der Dicke der zu entfernenden Deckschicht entspricht. In diesem Fall erstreckt sich das zumindest eine Fräsmittel nur so weit über das dem Material zugewandte Ende des Reibschweißdoms, wie dieses notwendig ist, um die Deckschicht zu entfernen.

In einer weiteren bevorzugten Ausführungsform weist das zumindest eine Fräsmittel eine Fräskante auf, wobei die zumindest eine Fräskante im Wesentlichen senkrecht zur Drehachse des Antriebstrangs ausgerichtet ist. Das zumindest eine Fräsmittel kann eine oder mehrere Fräskanten aufweisen, die durchgängig oder unterbrochen sein können. Die eine oder die mehreren Fräskanten können auch gehärtet sein. Des Weiteren kann das zumindest eine Fräsmittel auch austauschbar sein, beispielsweise kann das zumindest eine Fräsmittel eine Wendeschneidplatte sein, die eine gehärtete durchgehende oder unterbrochene Fräskante aufweist. Die zumindest eine Fräskante des zumindest einen Fräsmittels erlaubt das Entfernen der Deckschicht des Mehrschichtmaterials in das der Reibschweißdom gesetzt werden soll, beispielsweise durch abschaben oder abfräsen der Deckschicht. Es ist aber auch möglich, dass die Deckschicht durch die von dem zumindest einen Fräsmittel ausgeübte Reibung und den Druck aufgeschmolzen wird. Dies hat den Vorteil, dass sich das so aufgeschmolzene Deckschichtmaterial beim Setzen des Reibschweißdoms mit diesem verbinden kann. Das Entfernen der Deckschicht kann also auch umfassen, dass die Deckschicht aufgeschmolzen beziehungswiese angeschmolzen wird.

In einer weiteren bevorzugten Ausführungsform weist das zumindest eine Schneidmittel eine Schneidkante auf, wobei die zumindest eine Schneidkante im Wesentlichen senkrecht zur Drehachse des Antriebstrangs ausgerichtet ist. Das zumindest eine oder die mehreren angebrachten Schneidkanten erlauben es, dass beim Setzen des Reibschweißdoms der entstehende Wulst am Rand des Reibschweißdoms, also am Übergang vom Material zum Reibschweißdom, abgeschabt beziehungsweise abgeschnitten wird. Das zumindest eine Schneidmittel kann eine oder mehrere gehärtete Schneidkanten aufweisen, die durchgängig oder unterbrochen sein können. Des Weiteren kann das zumindest eine Schneidmittel auch austauschbar sein. Beispielsweise kann das zumindest eine Schneidmittel eine Wendeschneidplatte sein, die eine gehärtete durchgehende oder unterbrochene Schneidkante aufweist. Die Position der zumindest einen Schneidkante des zumindest einen Schneidmittels kann senkrecht zur Setzrichtung des Reibschweißdoms variabel sein, so dass das Setzwerkzeug an verschiedene Größen von Reibschweißdomen angepasst werden kann.

In einer weiteren bevorzugten Ausführungsform weist der erste Endbereich des Setzwerkzeuges zumindest eine Zentrierspitze auf, um den Reibschweißdom bezüglich des ersten Endbereichs und/oder des Materials in das der Reibschweißdom gesetzt werden soll zu zentrieren. Da das Reibschweißen durch eine Drehbewegung des Reibschweißdoms in dem Material durchgeführt wird, ist eine möglichst genaue Zentrierung des Reibschweißdoms notwendig, um ein bestmögliches Ergebnis zu erzielen. Sollte beispielsweise durch eine nicht genaue Zentrierung des Reibschweißdoms eine Unwucht entstehen, so kann dies dazu führen, dass nicht alle Seiten des Reibschweißdoms gleich gut mit dem Material verschweißt werden. Die zumindest eine Zentrierspitze ist vorzugsweise derart ausgestaltet, dass sie an dem dem Material zugewandten Ende des Reibschweißdoms aus dem Reibschweißdom herausschaut und somit bei dem Setzen des Reibschweißdoms vor dem Reibschweißdom auf das Material auftrifft und dort eine Zentrieröffnung bildet. Die zumindest eine Zentrierspitze kann auch zusätzliche Mittel aufweisen, die vor dem Setzen des Reibschweißdoms diesen an dem ersten Endbereich des Antriebstrangs halten.

In einer weiteren bevorzugten Ausführungsform des erfindungsgemäßen Setzwerkzeuges sind das zumindest eine Schneidmittel und das zumindest eine Fräsmittel mit dem ersten Endbereich des Antriebstrangs drehfest verbunden. Der Antriebstrang kann dementsprechend von dem Antrieb auf das zumindest eine Schneidmittel und das zumindest eine Fräsmittel Drehmoment übertragen. Das zumindest eine Schneidmittel und das zumindest eine Fräsmittel führen dementsprechend die gleiche Drehbewegung aus wie der Antriebstrang. Wird dementsprechend der Antriebstrang um 360° gedreht, so werden auch das zumindest eine Schneidmittel und das zumindest eine Fräsmittel um 360° gedreht.

In einer weiteren bevorzugten Ausführungsform weist das erfindungsgemäße Setzwerkzeug auch zumindest eine Kupplung auf, wobei die zumindest eine Kupplung derart ausgestaltet ist, dass die Drehbewegung des Antriebstrangs von der Drehbewegung des zumindest einen Schneidmittels und/oder des zumindest einen Fräsmittels entkoppelt werden kann. In Bezug auf das zumindest eine Fräsmittel hat dies zum Beispiel den Vorteil, dass keine Kraftübertragung zwischen Antriebstrang und Fräsmittel mehr durchgeführt werden muss, wenn die Deckschicht entfernt ist. In Bezug auf das zumindest eine Schneidmittel hat dies den Vorteil, dass sich das zumindest eine Schneidmittel auch nach dem Stoppen der Drehbewegung des Antriebstrangs noch weiter drehen kann, also Nachlaufen kann, und mit dieser Nachlaufbewegung noch Material der Wulst entfernen kann, ohne dass der Reibschweißdom mittels des Antriebstrangs weiter gedreht werden müsste.

In einer weiteren bevorzugten Ausführungsform weist das erfindungsgemäße Setzwerkzeug ein Getriebe auf, so dass mit einer 360° Drehung des Antriebstrangs das zumindest eine Fräsmittel und/oder das zumindest eine Schneidmittel mehrere Umdrehung durchführen kann. Dies hat den Vorteil, dass eine erhöhte Drehzahl bewerkstelligt werden kann, ohne dass der Antriebstrang schneller gedreht werden müsste. Das erfindungsgemäße Setzwerkzeug wird bevorzugt mit einer Umdrehungszahl von mehr als 2000 Umdrehungen pro Minute bedient. Mittels eines Getriebes wäre es dementsprechend möglich das zumindest eine Fräsmittel und das zumindest eine Schneidmittel schneller zu drehen. Mittels des Getriebes ist es auch möglich, dass das zumindest eine Schneidmittel, das zumindest eine Fräsmittel und der Reibschweißdom unabhängig voneinander gedreht werden und unterschiedliche Umdrehungszahlen aufweisen. Es ist auch denkbar, dass sich das zumindest eine Schneidmittel und/oder das zumindest eine Fräsmittel entgegen der Drehrichtung des Antriebstrangs drehen, um so die Entfernwirkung zu verbessern. Das Getriebe kann auch eine Blockierstellung aufweisen, so dass in dieser Stellung das zumindest eine Schneidmittel und das zumindest eine Fräsmittel sowie der Reibschweißdom die gleiche Umdrehungszahl aufweisen.

Des Weiteren wird die obige Aufgabe auch durch einen Reibschweißdom gelöst, wobei der Reibschweißdom zumindest eine sich durch den Reibschweiß hindurch erstreckende Öffnung aufweist, wobei die Öffnung sich entlang der Setzrichtung des Reibschweißdoms von einem ersten Ende des Reibschweißdoms bis zu einem zweiten Ende des Reibschweißdoms erstreckt und wobei die zumindest eine Öffnung ausgestaltet ist zur Aufnahme zumindest eines Teils eines Fräsmittels eines Setzwerkzeuges. Das sich durch die Öffnung des Reibeschweißdoms erstreckende zumindest eine Fräsmittel kann dabei in der Lage sein ein Drehmoment von dem Antriebstrang auf den Reibschweißdom zu übertragen und gleichzeitig kann das zumindest eine Fräsmittel verwendet werden, um eine Deckschicht des Materials in das der Reibschweißdom gesetzt werden soll zu entfernen. Zum Entfernen der Deckschicht steht bevorzugt ein Ende des sich durch den Reibschweißdom erstreckenden zumindest einen Fräsmittels in einer ersten Position über das dem Material zugewandte Ende des Reibschweißdoms über, wenn dieser am ersten Endbereich des Antriebstrangs des Setzwerkzeuges angeordnet ist, so dass dieses Ende des Fräsmittels vor dem Ende des Reibschweißdoms auf das Material auftrifft. Das zumindest eine Fräsmittel des Setzwerkzeuges entfernt dann in einem ersten Schritt die Deckschicht des Materials. Wenn die Deckschicht vollständig entfernt ist oder soweit aufgeschmolzen ist, dass der Reibschweißdom gesetzt werden kann, so wird das zumindest eine Fräsmittel durch die zumindest eine Öffnung im Reibschweißdom in eine zweite Position zurückgezogen in der das zumindest eine Fräsmittel nicht mehr in unmittelbarem Kontakt mit dem Material steht.

Die zumindest eine Öffnung des erfindungsgemäßen Reibschweißdoms ist von der zentralen Drehachse des Reibschweißdoms beabstandet. Da das zumindest eine Fräsmittel des Setzwerkzeuges die Deckschicht zumindest in einem derartigen Bereich entfernen muss der dem Querschnitt des Reibschweißdoms im Wesentlichen entspricht, oder zumindest dem Querschnitt des Reibschweißdoms an der dem Material zugewandten Ende, muss das zumindest eine Fräsmittel versetzt zur Drehachse des Reibschweißdoms sich durch diesen erstrecken.

Die Aufgabe wird auch gelöst durch ein erfindungsgemäßes Setzwerkzeugsystem bestehend aus dem oben beschriebenen Setzwerkzeug und zumindest einem oben beschriebenen Reibschweißdom, wobei der Reibschweißdom am Ende des ersten Endbereichs des Antriebstrangs des Setzwerkzeuges angeordnet ist.

Die Aufgabe wird auch gelöst durch ein Verfahren zum Setzen eines Reibschweißdoms, wobei das Verfahren die Schritte aufweist von Anordnen des Reibschweißdoms an einem ersten Endbereich eines Antriebstrangs eines Setzwerkzeuges, Abfräsen einer Deckschicht eines Materials in das der Reibschweißdom gesetzt werden soll mit zumindest einem Fräsmittel angeordnet an dem ersten Endbereich des Antriebstrangs des Setzwerkzeuges, wobei sich das zumindest eine Fräsmittel während dem Abfräsen zumindest zum Teil durch eine Öffnung des Reibschweißdoms hindurch erstreckt und wobei sich das zumindest eine Fräsmittel relativ zum Reibschweißdom bewegen kann und Setzen des Reibschweißdoms bei gleichzeitigem Entfernen des beim Setzen des Reibschweißdoms entstehenden Materialwulstes mit zumindest einem Schneidmittel angeordnet an dem ersten Endbereich des Antriebstrangs.

In einer bevorzugten Ausführungsform des erfindungsgemäßen Verfahrens, weist dieses weiter den Schritt auf von Bewegen des zumindest einen Fräsmittels von einer ersten Position hin zu einer zweiten Position nach dem Abfräsen der Deckschicht, wobei in der ersten Position ein Ende des Fräsmittels näher am Material angeordnet ist als ein dem Material zugewandtes Ende des gehaltenen Reibschweißdoms und wobei in der zweiten Position das eine Ende des zumindest einen Fräsmittels weiter oder gleich weit vom Material entfernt ist wie das Ende des gehaltenen Reibschweißdoms.

Weitere Einzelheiten, Merkmale und Vorteile der Gegenstände der Erfindung ergeben sich aus den Unteransprüchen, sowie aus der nachfolgenden Beschreibung der zugehörigen Zeichnungen, in denen ein Ausführungsbeispiel der Erfindung dargestellt ist. Es zeigen:
- Fig. 1: eine Schnittansicht eines Ausführungsbeispiels des erfindungsgemäßen Setzwerkzeuges,
- Fig. 2: eine schematische Ansicht eines Setzvorgangs eines Reibschweißdoms mit dem Setzwerkzeug entsprechend des Ausführungsbeispiels gezeigt in Fig. 1.

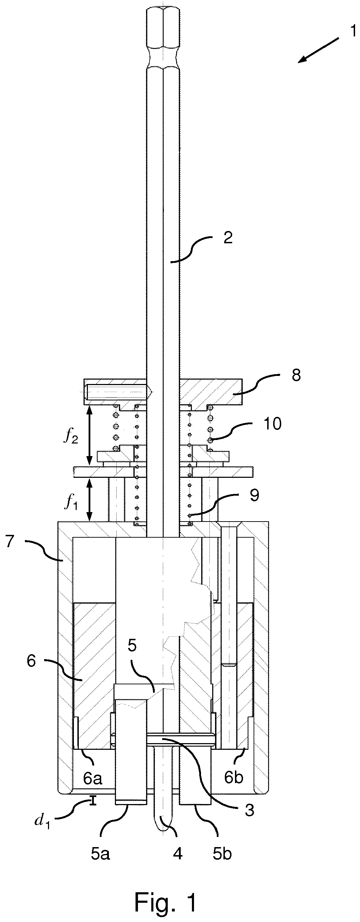

Figur 1 zeigt eine Schnittansicht eines erfindungsgemäßen Setzwerkzeuges 1 zum Setzen eines Reibschweißdoms (hier nicht gezeigt), insbesondere zum Setzen eines Reibschweißdoms in ein Mehrschichtmaterial (hier nicht gezeigt). Das Setzwerkzeug 1 weist einen Antriebstrang 2 mit einem ersten Endbereich und einem zweiten Endbereich auf. Der zweite Endbereich ist in dem in Figur 1 gezeigten Ausführungsbeispiel der obere Bereich des Antriebstrangs 2 und der erste Endbereich ist der untere Bereich des Antriebstrangs 2. Der zweite Endbereich des Antriebstrangs 2 ist in dem in Figur 1 gezeigten Ausführungsbeispiel sechseckig - also bitförmig - ausgestaltet, so dass der zweite Endbereich mit einer entsprechenden Bitaufnahme an einem Antrieb kraftschlüssig verbunden werden kann, so dass Drehmoment von dem Antrieb auf den Antriebstrang 2 übertragen werden kann.

An dem ersten Endbereich des Antriebstrangs 2 ist in dem in Figur 1 gezeigten Ausführungsbeispiel eine Halteplatte 3 angeordnet. Diese Halteplatte 3 dient zum Halten des Reibschweißdoms (hier nicht gezeigt) und ist ausgestaltet und bestimmt, um zumindest das dem Material abgewandte Ende des Reibschweißdoms zu kontaktieren. Die Halteplatte 3 sorgt dafür, dass der Reibschweißdom eine mit dem Antriebstrang 2 gleichförmige Bewegung ausführt, wenn der Antriebstrang 2 vorgetrieben - also in dem gezeigten Ausführungsbeispiel nach unten bewegt - wird. Erfährt der Antriebstrang 2 einen Vortrieb, so erfährt auch der Reibschweißdom einen entsprechenden Vortrieb in Richtung Mehrschichtmaterial. Die Halteplatte 3 bildet dementsprechend ein Gegenlager für den Reibschweißdom, so dass dieser unter Druck in das Mehrschichtmaterial getrieben werden kann. Der Anpressdruck des Reibschweißdoms hängt dabei vom Material ab, beispielsweise kann dieser oberhalb von 200N liegen.

An der Halteplatte 3 befindet sich auch eine Zentrierspitze 4, die sich in Richtung des Mehrschichtmaterials in das der Reibschweißdom gesetzt werden soll - also in dem gezeigten Ausführungsbeispiel nach unten - von der Halteplatte 3 weg erstreckt und sich verjüngt. Die Zentrierspitze 4 hat dabei bevorzugt eine Erstreckung von der Halteplatte 3 weg, die größer ist als die Dicke des Reibschweißdoms, so dass die Zentrierspitze 4 vor dem Reibschweißdom auf das Mehrschichtmaterial auftrifft und dort eine Zentrieröffnung bildet. Die Zentrierspitze 4 bildet dementsprechend den ersten Kontakt mit dem Material und sorgt dafür, dass der Reibschweißdom zentriert gesetzt wird und keine Unwucht entsteht, die sich nachteilig auf das Verschweißen des Reibschweißdoms mit dem Mehrschichtmaterial auswirken könnte.

An dem ersten Endbereich des Antriebstrangs 2 ist des Weiteren ein Fräsmittel 5 angeordnet, welches in dem in Figur 1 gezeigten Ausführungsbeispiel zwei Fräskanten 5a, 5b aufweist. Diese zwei Fräskanten 5a, 5b sind derart ausgestaltet, dass sie die Deckschicht des Mehrschichtmaterials, in das der Reibschweißdom gesetzt werden soll Abfräsen können. Hierzu sind die Fräskanten 5a, 5b des zumindest einen Fräsmittels 5 bevorzugt härter als das Deckschichtmaterial. Des Weiteren sind die zwei Fräskanten 5a, 5b in einer ersten Position des zumindest einen Fräsmittels 5 bevorzugt derart angeordnet, dass die Fräskanten 5a, 5b näher am Mehrschichtmaterial angeordnet sind als das dem Mehrschichtmaterial zugewandte Ende des von der Halteplatte 3 gehaltenen Reibschweißdoms. Diese Anordnung kann beispielsweise dadurch erzeugt werden, dass sich das Fräsmittel 5 in einer ersten Position zumindest teilweise durch den von der Halteplatte 3 gehaltenen Reibschweißdom erstreckt. Dies hat zur Folge, dass die Fräskanten 5a, 5b des Fräsmittels 5 beim Setzen des Reibschweißdoms vor diesem auf das Mehrschichtmaterial auftreffen und die Deckschicht entfernen können. Nach dem Entfernen der Deckschicht kann das Fräsmittel 5 dann in eine zweite Position bewegt werden, in der die Fräskanten 5a, 5b des zumindest einen Fräsmittels 5 nicht mehr unmittelbaren Kontakt mit dem Mehrschichtmaterial haben. Dies kann zum Beispiel dadurch bewerkstelligt werden, dass sich das Fräsmittel 5 relativ zum Antriebstrang 2 nach oben bewegt oder sich der Antriebstrang 2 mit der Halteplatte 3 nach unten bewegt. Hierdurch wird der gehaltene Reibschweißdom von dem Fräsmittel 5 abgestreift.

Diese Bewegung des Fräsmittels 5 kann durch einen Mitnehmer verursacht werden. Dieser Mitnehmer ist in dem in Figur 1 gezeigten Ausführungsbeispiel durch die Anschlagsglocke 7 realisiert. Diese Anschlagsglocke 7 ist am ersten Endbereich des Antriebstrangs 2 angeordnet und umgibt das Fräsmittel 5. Die Anschlagsglocke 7 ist nach unten hin, also in Setzrichtung des Reibschweißdoms geöffnet und ist an ihrem anderen Ende geschlossen. Dieses andere Ende weist eine zentrale Öffnung auf, durch die sich der Antriebstrang 2 erstreckt.

Die Anschlagsglocke 7 ist in dem gezeigten Ausführungsbeispiel fest mit dem Fräsmittel 5 verbunden und kann sich relativ zum ersten Endbereich des Antriebstrangs 2 also relativ zum Reibschweißdom gehalten an der Halteplatte 3 entlang des Antriebstrangs 2 bewegen.

In dem hier gezeigten Ausführungsbeispiel sind die Fräskanten 5a, 5b des Fräsmittels 5 außerhalb der Anschlagsglocke 7 angeordnet. Das Fräsmittel 5 steht somit zumindest teilweise über das offene Ende der Anschlagsglocke 7 über. Dabei entspricht der Abstand *d*₁ der Fräskanten 5a, 5b zum offenen Ende der Anschlagsglocke 7 bevorzugt der Dicke der zu entfernenden Deckschicht des Mehrschichtmaterials in das der Reibschweißdom gesetzt werden soll.

Um das Setzwerkzeug 1 bei unterschiedlich dicken Deckschichten und unterschiedlich dicken Reibschweißdomen verwenden zu können, können die Anschlagsglocke 7 und das Fräsmittel 5 auch derart verbunden werden, dass deren Position relativ zueinander einstellbar also variabel ist. Hierdurch wird zum Beispiel gewährleistet, dass die Fräskanten 5a, 5b des Fräsmittels 5 unterschiedlich weit über das offene Ende der Anschlagsglocke 7 überstehen können, also einen unterschiedlichen Abstand *d*₁ von dem offenen Ende der Anschlagsglocke 7 haben können. Bevorzugt entspricht dieser einstellbare Abstand *d*₁ der Dicke der zu entfernenden Deckschicht, da das Fräsmittel 5, welches mit seinen Fräskanten 5a, 5b über das offene Ende der Anschlagsglocke 7 zumindest teilweise übersteht, zumindest soweit in das Mehrschichtmaterial eindringen kann, wie der Abstand *d*₁ zwischen Fräskanten 5a, 5b und dem offenen Ende der Anschlagsglocke 7 groß ist.

Die Anschlagsglocke 7 und das mit der Anschlagsglocke 7 verbundene Fräsmittel 5 sind des Weiteren bevorzugt beweglich am Antriebstrang 2 angeordnet. Diese bewegliche Anordnung der Anschlagsglocke 7 und des damit verbundenen Fräsmittels 5 kann beispielsweise dadurch bewerkstelligt werden, dass die Anschlagsglocke 7 über eine Anschlagsplatte 8 und eine Feder 9 am Antriebstrang 2 befestigt ist. Die Anschlagsglocke 7 und das Fräsmittel 5 können sich dementsprechend relativ zum an der Halteplatte 3 gehaltenen Reibschweißdom bewegen.

Setzt der Rand der Anschlagsglocke 7 nach Entfernen der Deckschicht auf die noch verbleibende Deckschicht auf und wird der Antriebstrang 2 und damit der Reibschweißdom weiter vorgeschoben, so wird die Feder 9 komprimiert und der Antriebstrang 2 kann um den Federweg *f*₁+*f*₂ ins Material getrieben werden. Da die Anschlagglocke 7 mit dem Fräsmittel 5 verbunden ist und beide Bauteile sich relativ zum Antriebstrang 2 bewegen können, führt ein weiterer Vortrieb des Antriebstrangs 2 nach Entfernen der Deckschicht dazu, dass der Reibschweißdom von dem Fräsmittel 5 abgestreift wird und sich die Fräskanten 5a, 5b nach dem Entfernen der Deckschicht entweder innerhalb des Reibschweißdoms befinden oder oberhalb des einen Endes des Reibschweißdoms, welches der Halteplatte 3 zugewandt ist. Das Abstreifen des Fräsmittels 5 von dem Reibschweißdom geschieht dementsprechend durch ein Verbleiben der Anschlagsglocke 7 auf der Deckschicht des Mehrschichtmaterials.

Nach dem Entfernen der Deckschicht durch das Fräsmittel 5, wird der Reibschweißdom mit dem unter der Deckschicht liegenden Material mittels Reibung und Druck verschweißt. Hierbei tritt aufgeschmolzenes Material an der Oberfläche aus. Um dieses Material zu entfernen, weist der erste Endbereich des Antriebstrangs 2 des Weiteren zumindest ein Schneidmittel 6 auf. In dem hier gezeigten Ausführungsbeispiel weist das Schneidmittel 6 zwei Schneidkanten 6a, 6b auf. Diese Schneidkanten 6a, 6b können zum Beispiel die Schneidkanten von am Schneidmittel 6 angebrachten Wendeschneidplatten sein. Die Schneidkanten 6a, 6b des Schneidmittels 6 sind in dem gezeigten Ausführungsbeispiel dabei bündig mit der Halteplatte 3 ausgerichtet, so dass beim Setzen des Reibschweißdoms das aufgeschmolzene Material, welches oberflächig austritt, entfernt wird und eine ebene Oberfläche erzeugt wird. Bündig mit der Halteplatte 3 ausgerichtet bedeutet, dass die Schneidkanten 6a, 6b in einer Ebene mit der das eine Ende des Reibschweißdoms kontaktierenden Seite der Halteplatte 3 liegen.

Das Schneidmittel 6 ist des Weiteren über den Anschlag 8 und einer daran befestigten Feder 10 federnd am Antriebstrang 2 gelagert und kann sich relativ zum Antriebstrang 2 sowie relativ zum Fräsmittel 5 entlang des Antriebstrangs 2 bewegen. Dabei kann sich das Schneidmittel 6 um den Federweg *f*₂ der Feder 10 entlang des Antriebstrangs 2 bewegen. Die federnde Lagerung des Schneidmittels 6 hat den Vorteil, dass beim Entfernen des beim Setzen des Reibschweißdoms entstehenden Wulstes, dass Schneidmittel 6 nur den Wulst oberflächenbündig mit Hilfe der Schneidkanten 6a, 6b entfernt, nicht aber auch Teile der Deckschicht.

Die Anschlagsplatte 8 bildet ein Gegenlager für die Feder 9, die eine Relativbewegung des Fräsmittels 5 und der Anschlagsglocke 7 in Bezug auf den Antriebstrang 2 erlaubt sowie für die Feder 10, die eine Relativbewegung des Schneidmittels 6 in Bezug auf den Antriebstrang 2 erlaubt und kann an verschiedenen Positionen entlang des Antriebstrangs 2 angeordnet werden. In dem hier gezeigten Ausführungsbeispiel ist diese variable Anordnung der Anschlagsplatte 8 beispielsweise durch eine Madenschraubensicherung bewerkstelligt. Dem Fachmann sind aber auch andere Möglichkeiten bekannt, wie die Anschlagsplatte 8 an dem Antriebstrang variabel angeordnet werden kann.

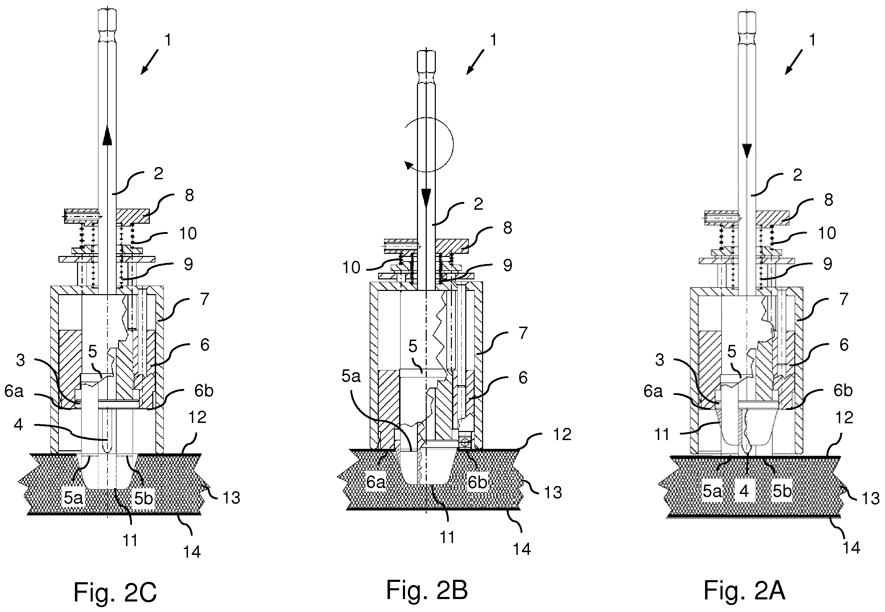

Das Zusammenspiel der einzelnen Bauteile des Setzwerkzeuges 1 wird weiter deutlich anhand des in Figur 2 schematisch dargestellten Setzvorgangs eines Reibschweißdoms.

Figur 2 zeigt in drei Schritten schematisch das Setzen eines Reibschweißdoms 11 in ein Mehrschichtmaterial mit einer oberen Deckschicht 12, einer inneren Materialschicht 13 und einer unteren Deckschicht 14. Das Setzen des Reibschweißdoms 11 wird dabei mit einem in Figur 1 gezeigten Ausführungsbeispiel eines erfindungsgemäßen Setzwerkzeuges 1 durchgeführt.

Dabei zeigt Figur 2A das Setzwerkzeug 1 mit einem an der Halteplatte 3 angeordneten Reibschweißdom 11. Der gezeigte Reibschweißdom 11 hat dabei ein erstes die Halteplatte 3 kontaktierendes Ende und ein der Halteplatte 3 gegenüberliegendes Ende. In Setzrichtung des Reibschweißdoms 11, also von dem Ende, das die Halteplatte kontaktiert, zu dem anderen Ende, das in Richtung Mehrschichtmaterial zeigt, hat der Reibschweißdom 11 einen verjüngenden Querschnitt. Der gezeigte Reibschweißdom 11 hat also einen Außendurchmesser am die Halteplatte 3 kontaktierendem Ende, der größer ist als der Außendurchmesser am gegenüberliegenden Ende. Dem Fachmann sind aber auch andere Reibschweißdome 11 mit anderen Querschnitten bekannt, die mit dem erfindungsgemäßen Setzwerkzeug 1 verwendet werden können.

Des Weiteren weist der Reibschweißdom 11 drei Öffnungen auf, die sich von dem einen Ende des Reibschweißdoms 11 zum anderen Ende erstrecken, also Öffnungen, die sich durch den Reibschweißdom 11 hindurch erstrecken. Durch zwei dieser Öffnungen erstrecken sich die Schenkel des "U"-förmigen Fräsmittels 5, also jeweils ein Schenkel des Fräsmittels 5 durch eine Öffnung des Reibschweißdoms 11. Dabei sind diese beiden Öffnungen beabstandet von der Drehachse des Reibschweißdoms 11 angeordnet und ausgelegt um die Schenkel des Fräsmittels 5 zu empfangen. Die dritte Öffnung des Reibschweißdoms 11 ist zentral zwischen den beiden anderen Öffnungen angeordnet und dazu ausgelegt die Zentrierspitze 4 des Setzwerkzeuges 1 zu empfangen. Die Zentrierspitze 4 erstreckt sich dementsprechend auch durch den Reibschweißdom 11 hindurch.

Die Schenkel des Fräsmittels 5 stehen über dem der Halteplatte 3 abgewandtem Ende des Reibschweißdoms 11 über. Die Schenkel haben also eine größere Erstreckung als die Dicke des Reibschweißdoms 11. Die Schenkel des Fräsmittels 5 stehen auch über den Rand der Anschlagsglocke 7 über, so dass wenn die Fräskanten 5a, 5b der Schenkel des Fräsmittels 5 die Deckschicht 12 des Mehrschichtmaterials berühren, ein Spalt zwischen dem Rand der Anschlagsglocke 7 und der Deckschicht 12 entsteht. Die Höhe dieses Spaltes, also wie weit der Rand der Anschlagsglocke 7 über der Deckschicht 12 übersteht ist dabei vorgegeben durch den Abstand der Fräskanten 5a, 5b des Fräsmittels 5 zum Rand der Anschlagsglocke 7. Bevorzugt entspricht dieser Abstand der Dicke der zu entfernenden Deckschicht 12.

Wird nun der Antriebstrang 2 in Richtung Mehrschichtmaterial unter Drehung bewegt, so entfernt das Fräsmittel 5 mit Hilfe der Fräskanten 5a, 5b zunächst die Deckschicht 12 des Mehrschichtmaterials. Dieses Entfernen geschieht zumindest auf einer Breite, die der Erstreckung der Fräskanten 5a, 5b senkrecht zur Drehachse des Antriebstrangs 2 entspricht. Dieser entfernte Bereich entspricht bevorzugt im Wesentlichen dem Querschnitt des Reibschweißdoms 11 an dem in Richtung Mehrschichtmaterial zeigenden Ende.

Trifft der Rand der Anschlagsglocke 7 beim weiteren Vortrieb des Antriebstrangs 2 auf die Deckschicht 12 auf, so kann das mit der Anschlagsglocke 7 verbundene Fräsmittel 5 beziehungsweise dessen Schenkel mit den Fräskanten 5a, 5b nicht weiter in das Mehrschichtmaterial eindringen, da die Anschlagglocke 7 einen größeren Querschnitt hat als der durch das Fräsmittel 5 entfernte Bereich der Deckschicht 12. Da das Fräsmittel 5 und die Anschlagsglocke 7 sich relativ zum Antriebstrang 2 entlang des Antriebstrangs 2 bewegen können, also sich der Antriebstrang 2 relativ zum Fräsmittel 5 und der Anschlagsglocke 7 bewegen kann, verbleiben das Fräsmittel 5 und die Anschlagsglocke 7 auch beim weiteren Vortrieb des Antriebstrangs 2 an Ort und Stelle und dringen nicht weiter in das Mehrschichtmaterial ein. Ist diese Relativbewegung wie in dem gezeigten Ausführungsbeispiel durch eine Anschlagsplatte 8 und eine Feder 9 realisiert, so wird beim Vortrieb des Antriebstrangs 2 die Feder 9 komprimiert, da die Anschlagsplatte 8 eine gleichförmige Bewegung mit dem Antriebstrangs 2 durchführt.

Beim weiteren Vortrieb des Antriebstrangs 2 wird der Reibschweißdom 11 unter Druck und Reibung durch den durch das Fräsmittel 5 entfernten Bereich der Deckschicht 12 mit der inneren Materialschicht 13 verschweißt. Der Reibschweißdom 11 wird also in dem in Figur 2 gezeigten Beispiel in Richtung der zweiten Deckschicht 14 bewegt und in die innere Materialschicht 13 getrieben. Bei diesem Vorgang wird der Reibschweißdom 11 von den Schenkeln des Fräsmittels 5 abgestreift. Abgestreift in diesem Fall bedeutet, dass der Reibschweißdom 11 durch den Vortrieb des Antriebstrangs 2 eine Relativbewegung in Bezug auf die Schenkel des Fräsmittels 5 ausführt, so dass der Abstand des einen Endes des Reibschweißdoms 11 zu den Fräskanten 5a, 5b des Fräsmittels 5 vergrößert wird. Die Fräskanten 5a, 5b des Fräsmittels 5 führen dementsprechend eine Relativbewegung in Richtung des die Halteplatte 3 kontaktierenden Endes des Reibschweißdoms 11 aus. Dies bedeutet, dass sich die Schenkel des Fräsmittels 5 auch nicht mehr vollständig durch den Reibschweißdom 11 erstrecken und nicht die innere Materialschicht 13 kontaktieren können. Dies ist in Figur 2B gezeigt.

Figur 2B zeigt den oberflächenbündig gesetzten Reibschweißdom 11. Oberflächenbündig heißt, dass das die Halteplatte 3 kontaktierende Ende des Reibschweißdoms 11 in einer Ebene liegt mit der Oberfläche der Deckschicht 12, also der Fläche der Deckschicht 12, die der inneren Materialschicht 13 abgewandt ist. Dabei ist zu erkennen, dass der Reibschweißdom 11 fast vollständig von den Schenkeln des Fräsmittels 5 abgestreift worden ist, die sich nämlich nur so weit in das Mehrschichtmaterial erstrecken können, wie der Abstand der Fräskanten 5a, 5b zu dem Rand der Anschlagsglocke 7 groß ist. Die Schenkel des Fräsmittels 5 haben sich also um den Abstand zwischen Rand der Anschlagsglocke 7 und Fräskanten 5a, 5b in das Mehrschichtmaterial gefräst. Bevorzugt ist diese Erstreckung in das Mehrschichtmaterial nur so groß, wie die Deckschicht 12 dick ist, es kann aber auch vorteilhaft sein, dass das Fräsmittel 5 sich weiter in das Mehrschichtmaterial erstreckt und auch Teile der inneren Materialschicht 13 entfernt. Dies kann zum Beispiel dann vorteilhaft sein, wenn weniger Material von dem Reibschweißdom 11 aufgeschmolzen und verdrängt werden soll. Wird weniger Material verdrängt, hat dies den Vorteil, dass weniger Material zwischen Reibschweißdom 11 und Deckschicht 12 austritt und weniger Material entfernt werden muss.

Zum Entfernen des an der Oberfläche austretenden Materials ist das Schneidmittel 6 vorgesehen. In Figur 2B ist zu erkennen, dass das Schneidmittel 6 mit seinen Schneidkanten 6a, 6b bündig mit der Deckschicht 12 ist. Dies bewirkt, dass das Material, welches zwischen dem Reibschweißdom 11 und dem Rand der Deckschicht 12 beim Verschweißen des Reibschweißdoms mit der inneren Materialschicht 13 austritt und eine Materialwulst um den Reibschweißdom 11 bildet, entfernt wird. Dabei können die Schneidkanten 6a, 6b des Schneidmittels 6 zum Beispiel Wendeschneidplatten sein.

Damit das Schneidmittel 6 beim Entfernen des Materialwulstes nicht auch die Deckschicht 12 um den Reibschweißdom 11 herum entfernt, ist das Schneidmittel 6 über die Anschlagsplatte 8 und die Feder 10 federnd am Antriebstrang 2 gelagert. Dies bewirkt, dass das Schneidmittel 6 sich relativ zum Antriebstrang 2 bewegen kann, jedenfalls soweit wie der Federweg der Feder 10 dies zulässt. Dies hat den Vorteil, dass sich das Schneidmittel 6 nicht in die Deckschicht 12 eingräbt und diese entfernt.

Figur 2C zeigt den Reibschweißdom 11 im gesetzten Zustand und das Setzwerkzeug 1 im entlasteten Zustand, also ohne dass weiter Druck auf den Reibschweißdom 11 durch den Antriebstrang 2 beziehungsweise die Halteplatte 3 ausgeübt wird. Entlastet bedeutet auch, dass die Federn 9 und 10 nicht mehr komprimiert sind. Das Setzwerkzeug 1 kann dann entfernt werden und ein neuer Reibschweißdom 11 kann an der Halteplatte 3 montiert werden, so dass ein neuer Setzvorgang gestartet werden kann.

## Patentansprüche

1. Ein Setzwerkzeug (1) zum Setzen eines Reibschweißdoms (11), insbesondere zum Setzen eines Reibschweißdoms (11) in ein Mehrschichtmaterial, das Setzwerkzeug (1) aufweisend:
einen Antriebsstrang (2) mit
einem ersten Endbereich zum Halten des Reibschweißdoms (11);
einem zweiten Endbereich, wobei der zweite Endbereich ausgestaltet ist, um eine Kraftkopplung mit einem Antrieb herzustellen,
**dadurch gekennzeichnet, dass**
an dem ersten Endbereich zumindest ein Schneidmittel (6) und zumindest ein Fräsmittel (5) angeordnet sind, wobei sich das zumindest eine Fräsmittel (5) relativ zum Reibschweißdom (11) bewegen kann.

2. Das Setzwerkzeug (1) nach Anspruch 1, wobei der erste Endbereich des Antriebstrangs (2) eine Halteplatte (3) zum Halten des Reibschweißdoms (11) aufweist und sich das zumindest eine Fräsmittel (5) relativ zur Halteplatte (3) bewegen kann.

3. Das Setzwerkzeug (1) nach einem der vorhergehenden Ansprüche, wobei das Setzwerkzeug (1) weiter einen Mitnehmer (7) aufweist, der Mitnehmer (7) ist ausgestaltet, um das zumindest eine Fräsmittel (5) relativ zum Reibschweißdom (11) entlang des Antriebstrangs (2) von einer ersten Position hin zu einer zweiten Position zu bewegen.

4. Das Setzwerkzeug (1) nach Anspruch 3, wobei in der ersten Position ein Ende des zumindest einen Fräsmittels (5) näher am Material angeordnet ist als ein dem Material zugewandtes Ende des gehaltenen Reibschweißdoms (11) und wobei in der zweiten Position das eine Ende des zumindest einen Fräsmittels (5) weiter oder gleich weit vom Material entfernt ist wie das Ende des gehaltenen Reibschweißdoms (11).

5. Das Setzwerkzeug (1) nach einem der vorhergehenden Ansprüche, wobei das zumindest eine Schneidmittel (6) zumindest eine Schneidkante (6a, 6b) aufweist, wobei die zumindest eine Schneidkante (6a, 6b) im Wesentlichen senkrecht zur Drehachse des Antriebsstrangs (2) ausgerichtet ist.

6. Das Setzwerkzeug (1) nach Anspruch 5, wobei das zumindest eine Schneidmittel (6) eine Wendeschneidplatte aufweist.

7. Das Setzwerkzeug (1) nach einem der vorhergehenden Ansprüche, wobei das zumindest eine Schneidmittel (6) und/oder das zumindest eine Fräsmittel (5) federnd am Antriebstrang (2) angeordnet sind.

8. Das Setzwerkzeug (1) nach einem der vorhergehenden Ansprüche, wobei eine erste Position des zumindest einen Schneidmittels (6) und/oder eine erste Position des zumindest einen Fräsmittels (5) am ersten Endbereich des Antriebstrangs (2) entlang des Antriebstrangs (2) einstellbar ist.

9. Das Setzwerkzeug (1) nach einem der Ansprüche 1 bis 8, wobei das zumindest eine Schneidmittel (6) und das zumindest eine Fräsmittel (5) mit dem ersten Endbereich des Antriebsstrangs (2) drehfest verbunden sind.

10. Das Setzwerkzeug (1) nach einem der Ansprüche 1 bis 8, wobei das Setzwerkzeug (1) weiter zumindest eine Kupplung aufweist, wobei die zumindest eine Kupplung ausgestaltet ist, um die Drehbewegung des Antriebsstrangs (2) von der Drehbewegung des zumindest einen Schneidmittels (6) und/oder des zumindest einen Fräsmittels (5) zu entkoppeln.

11. Ein Reibschweißdom (11),
**dadurch gekennzeichnet, dass** der Reibschweißdom (11) aufweist:
zumindest eine sich durch den Reibschweißdom (11) hindurch erstreckende Öffnung, wobei die Öffnung sich entlang der Setzrichtung des Reibschweißdoms (11) von einem ersten Ende des Reibschweißdoms (11) bis zu einem zweiten Ende des Reibschweißdoms (11) erstreckt, und
wobei die zumindest eine Öffnung beabstandet ist von der zentralen Drehachse des Reibschweißdoms (11), und
wobei die zumindest eine Öffnung ausgestaltet ist zur Aufnahme zumindest eines Teils eines Fräsmittels (5) eines Setzwerkzeuges (1).

12. Ein Setzwerkzeugsystem zum Setzen eines Reibschweißdoms (11), das Setzwerkzeugsystem aufweisend:
zumindest ein Setzwerkzeug (1) nach einem der Ansprüche 1 bis 10; und
zumindest einen Reibschweißdom (11) nach Anspruch 11, wobei der Reibschweißdom (11) am Ende des ersten Endbereichs eines Antriebstrangs (2) des Setzwerkzeuges (1) angeordnet ist.

13. Ein Verfahren zum Setzen eines Reibschweißdoms (11), insbesondere zum Setzen eines Reibschweißdoms (11) in ein Mehrschichtmaterial, das Verfahren aufweisend die Schritte von:
Anordnen des Reibschweißdoms (11) an einem ersten Endbereich eines Antriebstrangs (2) eines Setzwerkzeuges (1);
Abfräsen einer Deckschicht eines Materials in das der Reibschweißdom (11) gesetzt werden soll mit zumindest einem Fräsmittel (5) angeordnet an dem ersten Endbereich des Antriebstrangs (2), wobei sich das zumindest eine Fräsmittel (5) während dem Abfräsen zumindest zum Teil durch eine Öffnung des Reibschweißdoms (11) hindurch erstreckt und wobei sich das zumindest eine Fräsmittel (5) relativ zum Reibschweißdom (11) bewegen kann; und
Setzen des Reibschweißdoms (11) bei gleichzeitigem Entfernen des beim Setzen des Reibschweißdoms (11) entstehenden Materialwulstes mit zumindest einem Schneidmittel (6) angeordnet an dem ersten Endbereich des Antriebstrangs (2).

14. Das Verfahren nach Anspruch 13, weiter aufweisend:
Bewegen des zumindest einen Fräsmittels (5) von einer ersten Position hin zu einer zweiten Position nach dem Abfräsen der Deckschicht, wobei in der ersten Position ein Ende des zumindest einen Fräsmittels (5) näher am Material angeordnet ist als ein dem Material zugewandtes Ende des gehaltenen Reibschweißdoms (11) und wobei in der zweiten Position das eine Ende des zumindest einen Fräsmittels (5) weiter oder gleich weit vom Material entfernt ist wie das Ende des gehaltenen Reibschweißdoms (11).

## Claims

1. A mounting tool (1) for mounting a friction weld dome (11), in particular for mounting a friction weld dome (11) into a multilayer material, the mounting tool (1) comprising:
a drive shaft (2) with
a first end portion for holding the friction weld dome (11);
a second end portion, wherein the second end portion is configured to establish a force coupling with a drive,
**characterized in that**
at least one cutting means (6) and at least one milling means (5) are arranged at the first end portion, wherein the at least one milling means (5) can move relatively to the friction weld dome (11).

2. The mounting tool (1) according to claim 1, wherein the first end portion of the drive shaft (2) comprises a holding plate (3) for holding the friction weld dome (11) and wherein the at least one milling means (5) can move relatively to the holding plate (3).

3. The mounting tool (1) according to one of the preceding claims, wherein the mounting tool (1) further comprises a carrier (7), said carrier (7) being configured to move the at least one milling means (5) relatively to the friction weld dome (11) along the drive shaft (2) from a first position to a second position.

4. The mounting tool (1) according to claim 3, wherein in the first position one end of the at least one milling means (5) is closer to the material than a material-facing end of the held friction weld dome (11) and wherein in the second position the one end of the at least one milling means (5) is further or equally far away from the material than the end of the held friction weld dome (11).

5. The mounting tool (1) according to one of the preceding claims, wherein the at least one cutting means (6) comprises at least one cutting edge (6a, 6b), wherein the at least one cutting edge (6a, 6b) is orientated essentially perpendicular to the rotation axis of the drive shaft (2).

6. The mounting tool (1) according to claim 5, wherein the at least one cutting means (6) comprises an indexable insert.

7. The mounting tool (1) according to one of the preceding claims, wherein the at least one cutting means (6) and/or the at least one milling means (5) are arranged in a spring-loaded manner at the drive shaft (2).

8. The mounting tool (1) according to one of the preceding claims, wherein a first position of the at least one cutting means (6) and/or a first position of the at least one milling means (5) are adjustable at the first end portion of the drive shaft (2) along the drive shaft (2).

9. The mounting tool (1) according to one of the claims 1 to 8, wherein the at least one cutting means (6) and the at least one milling means (5) are attached in a torque-proof way to the first end portion of the drive shaft (2).

10. The mounting tool (1) according to one of the claims 1 to 8, wherein the mounting tool (1) further comprises at least one clutch, wherein the at least one clutch is configured to decouple the rotational movement of the drive shaft (2) from the rotational movement of the at least one cutting means (6) and/or the at least one milling means (5).

11. A friction weld dome (11), **characterized in that** the friction weld dome (11) comprises:
at least one opening extending through the friction weld dome (11), wherein the opening extends through the friction weld dome (11) from a first end of the friction weld dome (11) to a second end of the friction weld dome (11) in the mounting direction; and
wherein the at least one opening is spaced apart from the central axis of rotation of the friction weld dome (11), and
wherein the at least one opening is configured to accommodate at least a portion of a milling means (5) of a mounting tool (1).

12. A mounting tool system for mounting a friction weld dome (11), the mounting tool system comprising:
at least one mounting tool (1) according to one of the claims 1 to 10; and
at least one friction weld dome (11) according to claim 11, wherein the friction weld dome (11) is arranged at the end of the first end portion of a drive shaft (2) of the mounting tool (1).

13. A method for mounting a friction weld dome (11), in particular for mounting a friction weld dome (11) into a multilayer material, the method comprising the following steps:
arranging the friction weld dome (11) to a first end portion of a drive shaft (2) of a mounting tool (1);
milling off a covering layer of a material into which the friction weld dome (11) is to be mounted with at least one milling means (5) arranged at the first end portion of the drive shaft (2), wherein the at least one milling means (5) extends during the milling at least partially through an opening of the friction weld dome (11) and wherein the at least one milling means (5) can move relatively to the friction weld dome (11); and
mounting the friction weld dome (11) while simultaneously removing the material overhead created by mounting the friction weld dome (11) by ease of at least one cutting means (6) arranged at the first end portion of the drive shaft (2).

14. The method of claim 13, further comprising:
moving the at least one milling means (5) from a first position to a second position after milling off the covering layer, wherein in the first position one end of the at least one milling means (5) is closer to the material than a material-facing end of the held friction weld dome (11) and wherein in the second position the one end of the at least one milling means (5) is further or equally far away from the material than the end of the held friction weld dome (11).

## Revendications

1. Outil de pose (1) pour poser un dôme de soudage par friction (11), en particulier pour poser un dôme de soudage par friction (11) dans un matériau multicouche, l'outil de pose (1) présentant :
une chaîne cinématique (2) avec
une première zone d'extrémité pour le maintien du dôme de soudage par friction (11) ;
une deuxième zone d'extrémité, dans lequel la deuxième zone d'extrémité est configurée pour établir un couplage de force avec un entraînement,
**caractérisé en ce que**
au moins un moyen de coupe (6) et au moins un moyen de fraisage (5) sont agencés au niveau de la première zone d'extrémité, dans lequel l'au moins un moyen de fraisage (5) peut se déplacer par rapport au dôme de soudage par friction (11).

2. Outil de pose (1) selon la revendication 1, dans lequel la première zone d'extrémité de la chaîne cinématique (2) présente une plaque de maintien (3) pour le maintien du dôme de soudage par friction (11) et l'au moins un moyen de fraisage (5) peut se déplacer par rapport à la plaque de maintien (3).

3. Outil de pose (1) selon l'une quelconque des revendications précédentes, dans lequel l'outil de pose (1) présente en outre un entraîneur (7), l'entraîneur (7) est configuré pour déplacer l'au moins un moyen de fraisage (5) par rapport au dôme de soudage par friction (11) le long de la chaîne cinématique (2) d'une première position à une deuxième position.

4. Outil de pose (1) selon la revendication 3, dans lequel dans la première position, une extrémité de l'au moins un moyen de fraisage (5) est agencée plus près du matériau qu'une extrémité tournée vers le matériau du dôme de soudage par friction (11) maintenu et dans lequel dans la deuxième position, l'une extrémité de l'au moins un moyen de fraisage (5) est agencée plus loin ou à même distance du matériau que l'extrémité du dôme de soudage par friction (11) maintenu.

5. Outil de pose (1) selon l'une quelconque des revendications précédentes, dans lequel l'au moins un moyen de coupe (6) présente au moins une arête de coupe (6a, 6b), dans lequel l'au moins une arête de coupe (6a, 6b) est orientée sensiblement perpendiculairement à l'axe de rotation de la chaîne cinématique (2).

6. Outil de pose (1) selon la revendication 5, dans lequel l'au moins un moyen de coupe (6) présente une plaquette amovible.

7. Outil de pose (1) selon l'une quelconque des revendications précédentes, dans lequel l'au moins un moyen de coupe (6) et/ou l'au moins un moyen de fraisage (5) sont agencés de manière élastique au niveau de la chaîne cinématique (2).

8. Outil de pose (1) selon l'une quelconque des revendications précédentes, dans lequel une première position de l'au moins un moyen de coupe (6) et/ou une première position de l'au moins un moyen de fraisage (5) peut être réglée au niveau de la première zone d'extrémité de la chaîne cinématique (2) le long de la chaîne cinématique (2).

9. Outil de pose (1) selon l'une quelconque des revendications 1 à 8, dans lequel l'au moins un moyen de coupe (6) et l'au moins un moyen de fraisage (5) sont reliés solidaires en rotation à la première zone d'extrémité de la chaîne cinématique (2).

10. Outil de pose (1) selon l'une quelconque des revendications 1 à 8, dans lequel l'outil de pose (1) présente en outre au moins un embrayage, dans lequel l'au moins un embrayage est configuré pour découpler le mouvement de rotation de la chaîne cinématique (2) du mouvement de rotation de l'au moins un moyen de coupe (6) et/ou de l'au moins un moyen de fraisage (5).

11. Dôme de soudage par friction (11),
**caractérisé en ce que** le dôme de soudage par friction (11) présente :
au moins une ouverture s'étendant à travers le dôme de soudage par friction (11), dans lequel l'ouverture s'étend le long de la direction de pose du dôme de soudage par friction (11) d'une première extrémité du dôme de soudage par friction (11) à une deuxième extrémité du dôme de soudage par friction (11), et
dans lequel l'au moins une ouverture est espacée de l'axe de rotation central du dôme de soudage par friction (11), et
dans lequel l'au moins une ouverture est configurée pour la réception d'au moins une partie d'un moyen de fraisage (5) d'un outil de pose (1).

12. Système d'outil de pose pour la pose d'un dôme de soudage par friction (11), le système d'outil de pose présentant :
au moins un outil de pose (1) selon l'une quelconque des revendications 1 à 10 ; et
au moins un dôme de soudage par friction (11) selon la revendication 11, dans lequel le dôme de soudage par friction (11) est agencé à l'extrémité de la première zone d'extrémité d'une chaîne cinématique (2) de l'outil de pose (1).

13. Procédé de pose d'un dôme de soudage par friction (11), en particulier de pose d'un dôme de soudage par friction (11) dans un matériau multicouche, le procédé présentant les étapes de :
agencement du dôme de soudage par friction (11) au niveau d'une première zone d'extrémité d'une chaîne cinématique (2) d'un outil de pose (1) ;
fraisage d'une couche de revêtement d'un matériau dans lequel le dôme de soudage par friction (11) doit être posé avec au moins un moyen de fraisage (5) agencé au niveau de la première zone d'extrémité de la chaîne cinématique (2), dans lequel l'au moins un moyen de fraisage (5) s'étend pendant le fraisage au moins en partie à travers une ouverture du dôme de soudage par friction (11) et dans lequel l'au moins un moyen de fraisage (5) peut se déplacer par rapport au dôme de soudage par friction (11) ; et
pose du dôme de soudage par friction (11) lors du retrait simultané du bourrelet de matériau formé lors de la pose du dôme de soudage par friction (11) avec au moins un moyen de coupe (6) agencé au niveau de la zone d'extrémité de la chaîne cinématique (2).

14. Procédé selon la revendication 13, présentant en outre :
le déplacement de l'au moins un moyen de fraisage (5) d'une première position à une deuxième position après le fraisage de la couche de revêtement, dans lequel dans la première position, une extrémité de l'au moins un moyen de fraisage (5) est agencée plus près du matériau qu'une extrémité tournée vers le matériau du dôme de soudage par friction (11) maintenu et dans lequel dans la deuxième position, l'une extrémité de l'au moins un moyen de fraisage (5) est agencée plus loin ou à même distance du matériau que l'extrémité du dôme de soudage par friction (11) maintenu.
